# EUROPÄISCHE PATENTSCHRIFT

(11) **EP 1 731 668 B1**
(45) Veröffentlichungstag und Bekanntmachung des Hinweises auf die Patenterteilung: **30.09.2009**
(21) Anmeldenummer: 06112062.2
(22) Anmeldetag: 31.03.2006
(51) Int. Cl.: D21G 1/02, F16C 13/00

(54) **Biegeausgleichswalze**
Controlled deflection roll
Rouleau à compensation de flèche

(30) Priorität: 06.06.2005 DE 102005025950
(43) Veröffentlichungstag der Anmeldung: 13.12.2006
(73) Patentinhaber: Voith Patent GmbH, 89522 Heidenheim (DE)
(72) Erfinder: Kläui, Erich, 8472, Seuzach (CH); van Haag, Rolf Dr., 47647, Kerken (DE)
(74) Vertreter: Kunze, Klaus

(56) Entgegenhaltungen:
- EP-A- 1 279 766
- DE-A1- 3 802 234
- US-A- 4 404 724

## Beschreibung

Die Erfindung betrifft eine Biegeausgleichswalze mit einem umlaufenden Walzenmantel, einem den Walzenmantel axial durchsetzenden drehfesten Joch und wenigstens einer zwischen dem Joch und dem Walzenmantel angeordneten Stützquelle, die in einer im Joch vorgesehenen radialen Stützquellenbohrung radial beweglich dichtend geführt ist und deren Druckraum über eine Drossel mit Druckfluid versorgt wird, das über einen im Joch vorgesehenen, der betreffenden Stützquelle zugeordneten radialen Versorgungskanal zugeführt wird. Biegeausgleichswalzen dieser Art sind beispielsweise aus den Druckschriften DE 38 02 234 A und EP 0 747 530 A bekannt.

Aus der EP 1279766 A1 geht eine Biegeeinstellwalze hervor, aus deren Druckraum ein Seitenkanal abzweigt, über den mittels eines Druckventils ein Kühlölnebenstrom gesteuert werden kann.

Die US 4404724 empfiehlt ein Verhältnis zwischen der Druckfläche unterhalb eines Stützelementes und der Dichtfläche (Steg) der hydrostatischen Taschen.

Zur Erhöhung der Dämpfung einer Biegeausgleichswalze kann vor jede hydrostatisch oder hydrodynamisch betriebene Stützquelle eine speziell gestaltete Vordrossel geschaltet werden, die mit dem Joch fest verbunden ist. Der Einsatz einer solchen Vordrossel ist beispielsweise in der DE 38 02 234 A ausführlich beschrieben.

In der Praxis hat sich nun aber gezeigt, dass die bekannten Dämpfungsdrosseln nur in einem begrenzten niedrigen Frequenzbereich funktionieren, der je nach konstruktiver Ausgestaltung der Drossel bis etwa 200 oder etwa 300 Hz reicht. Angesichts der heutzutage üblichen hochfrequenten Problemfrequenzen, die insbesondere an Kalanderwalzen im Zusammenhang mit dem sogenannten "Barring"-Problem oberhalb von etwa 300 Hz auftreten, besteht ein Bedarf an einer Modifizierung bzw. Ergänzung der betreffenden Dämpfungssysteme.

Der allgemeine Wirkungsmechanismus eines betreffenden Dämpfungssystems ergibt sich aus folgendem:

Bei einem relativ zum Joch schwingenden Walzenmantel wird über die am Walzenmantel verhältnismäßig steif angekoppelten Stützelemente Druckfluid, insbesondere Öl über die zuvor genannten Dämpfungsdrosseln hin und her geschoben. Durch die in den Drosseln entstehende Reibung wird dem System Schwingungsenergie entzogen.

Physikalisch stellt das zwischen Joch und Stützquelle eingespannte Ölvolumen eine Reihenschaltung aus Feder, Masse und Dämpfer dar. Dabei ist die Federsteifigkeit durch die Kompressibilität des eingespannten Ölvolumens bestimmt. Die Masse ist gleich der zu bewegenden Ölmasse, während sich der Dämpfer aus dem Strömungswiderstand der Vordrossel ergibt. Das jeweilige Dämpfungssystem muss so ausgelegt sein, dass in einem bestimmten Frequenzbereich der Strömungswiderstand möglichst hoch ist, aber dennoch genügend Öl über die Drosselstelle pulsieren kann. Ist die Drossel zu eng, so verhält sich die zwischen Joch und Stützquelle eingespannte Ölsäule überwiegend wie eine Feder. Ist sie zu weit, so ist der Strömungswiderstand klein und damit die Dämpfung gering.

Bei genauerer Betrachtung der physikalischen Zusammenhänge zeigt sich allerdings, dass bei hohen Frequenzen sich das Öl in Strömungsrichtung zur Stützquelle betrachtet vor der Drossel in einem Versorgungskanal mit üblichen Abmessungen, bei dem der Bohrungsdurchmesser also etwa dem Durchmesser einer Rohrleitung entspricht, so träge verhält, dass wenig Öl bzw. Öl mit einer Volumenstromamplitude mit ungünstiger Phasenlage relativ zum schwingenden Walzenmantel über die Drosselstelle pulsiert.

Eine optimal ausgestaltete Drossel erreicht ihre volle Wirkung nur dann, wenn der Öldruck vor der Drosselstelle annähend konstant bleibt.

Entsprechend liegt der Erfindung die Aufgabe zugrunde, eine verbesserte Biegeausgleichswalze der eingangs genannten Art zu schaffen, bei der insbesondere auch in höheren Frequenzbereichen eine optimale Dämpfung gewährleistet ist.

Diese Aufgabe wird erfindungsgemäß durch die Merkmale des Anspruchs 1 gelöst..

Aufgrund dieser Ausbildung ist zunächst sichergestellt, dass der Fluid- bzw. Öldruck vor der Drosselstelle wenigstens annähernd konstant bleibt, womit insbesondere auch bei höheren Frequenzen eine optimale Dämpfung erreicht wird. Indem der Versorgungskanal auf einen möglichst großen Durchmesser aufgebohrt wird, wird die hydraulische Induktivität oder Trägheit der in Strömungsrichtung betrachtet der Dämpfungsdrossel vorgeschalteten Druckfluid- bzw. Ölsäule verringert. Das dadurch entstehende relativ große Ölvolumen besitzt zudem eine relativ große hydraulische Kapazität, die sich ebenfalls positiv auf die dynamische Druckpulsation vor der Dämpfungsdrossel auswirkt.

Bei einer bevorzugten praktischen Ausführungsform der erfindungsgemäßen Biegeausgleichswalze entspricht der Durchmesser des an die Drossel angrenzenden Abschnitts im Wesentlichen dem Durchmesser der Stützquellenbohrung.

Der Versorgungskanal erstreckt sich radial zwischen der Drossel der betreffenden Stützquelle und einer mehreren Stützquellen gemeinsamen axialen Versorgungsleitung . Dabei besitzt ein an die axiale Versorgungsleitung angrenzender Abschnitt des Versorgungskanals einen kleineren Durchmesser als der an die Drossel angrenzende Versorgungskanalabschnitt. Dabei ist dieser an die axiale Versorgungsleitung angrenzende Versorgungskanalabschnitt kleineren Durchmessers in Radialrichtung der Walze betrachtet kürzer als der an die Drossel angrenzende Versorgungskanalabschnitt größeren Durchmessers. Vorteilhafterweise kann der Versorgungskanal in Radialrichtung der Walze betrachtet über nahezu seine gesamte Länge hinweg durch den Abschnitt relativ größeren Durchmessers gebildet sein. Alternativ sind auch solche Ausführungen denkbar, bei denen sich der Abschnitt größeren Durchmessers bis zur axialen Versorgungsleitung erstreckt, d.h. der Versorgungskanal durchgehend den größeren Durchmesser besitzt.

Die hydraulische Kapazität des mit dem größeren Durchmesser erzielten relativ großen Druckfluid- bzw. Ölvolumens kann insbesondere durch die folgenden Maßnahmen weiter gesteigert werden:

So kann in den radial an die Drossel angrenzenden Versorgungskanalabschnitt vorteilhafterweise ein im Joch vorgesehener, sich allgemein in Querrichtung erstreckender Querkanal münden. Bevorzugt ist dieser Querkanal an seinem anderen Ende verschlossen.

Gemäß einer bevorzugten praktischen Ausführungsform ist der Querkanal mit kompressiblem Gas gefüllt. Dabei kann das Gas insbesondere über eine im Joch vorgesehene Gaszuleitung in den Querkanal eingebracht werden. Vorteilhafterweise ist das Gas unter hydraulischem Betriebsdruck der Walze in den Querkanal einbringbar.

Bei einer weiteren vorteilhaften Ausführungsform der erfindungsgemäßen Biegeausgleichswalze ist an der Innenwand des radial an die Drossel angrenzenden Versorgungskanalabschnitts ein Druckspeicher vorgesehen, der nach innen zum Druckfluid hin vorzugsweise durch eine Membran begrenzt ist.

Dabei kann dieser Druckspeicher insbesondere in Form eines zur Innenwand des radial an die Drossel angrenzenden Versorgungskanalabschnitts koaxialen Gaspolsters vorgesehen sein. Das Gas ist vorzugsweise wieder über eine im Joch vorgesehene Gaszuleitung einbringbar. Dabei kann dieses Gas insbesondere wieder unter hydraulischem Betriebsdruck der Walze eingebracht werden.

Bei im Wesentlichen konstantem Betriebsdruck der Walze ist der Druckspeicher vorzugsweise mit einem im Wesentlichen konstanten Gasdruck vorgespannt.

Dagegen ist im hydraulisch drucklosen Betrieb der Walze die Membran des Druckspeichers zweckmäßigerweise durch ein Lochblech stabilisiert.

Gemäß einer weiteren vorteilhaften Ausführungsform ist der Druckspeicher mit volumenkompressiblem Material hinterfüllt. Dabei kann das volumenkompressible Material vorteilhafterweise Polyurethanschaum, Gummikork und/oder gepresste Zöpfe aus Drahtgestricken umfassen. Dabei ist für geringere Drücke insbesondere Polyurethanschaum (bis etwa 7 bar) oder Gummikork (bis etwa 30 bar) geeignet. Für höhere Drücke bis etwa 100 bar sind zweckmäßigerweise gepresste Zöpfe aus Drahtgestricken einsetzbar, wie sie in Schockabsorbern verwendet werden.

Wie bereits erwähnt, kann als Druckfluid insbesondere Öl vorgesehen sein.

Neben der Maßnahme des Füllens einer angekoppelten Querbohrung mit kompressiblem Gas, bei der die Verbindungsquerschnitte des Druckfluidvolumens zur induzierten Gasblase auf maximalen Querschnitt und minimale Länge hin konstruktiv zu gestalten sind, ist also insbesondere auch der Einsatz eines speziell auf den Anwendungsfall hin gestalteten Druckspeichers beispielsweise in Form eines koaxialen Gaspolsters zwischen Öl und Wand denkbar, der bevorzugt keine Zulaufleitung und damit keine zusätzliche hydraulische Induktivität zum Gas-Speichervolumen aufweist.

Bei beiden Systemen wird das Gasvolumen zweckmäßigerweise unter hydraulischem Betriebsdruck der Walze über eine Gaszuleitung in die Walze eingebracht. Für relativ konstante hydraulische Betriebsdrücke der Walze kann der speziell gestaltete Druckspeicher mit einem konstanten Gasdruck vorgespannt werden. Im hydraulisch drucklosen Betrieb der Walze wird die Membran zweckmäßigerweise durch ein Lochblech stabilisiert.

Anstelle eines Gaspolsters ist, wie ebenfalls bereits erwähnt, insbesondere auch die Hinterfüllung mit einem volumenkompressiblen Material denkbar. Bei geringen Drücken ist zum Beispiel Polyurethanschaum (bis etwa 7 bar) oder Gummikork (bis etwa 30 bar) geeignet. Für hohe Drücke bis etwa 100 bar sind insbesondere gepresste Zöpfe aus Drahtgestricken einsetzbar, wie sie in Schockabsorbern verwendet werden.

Die Erfindung wird im Folgenden anhand von Ausführungsbeispielen unter Bezugnahme auf die Zeichnung näher erläutert; in dieser zeigen:
- Figur 1: eine schematische, geschnittene Teildarstellung einer beispielhaften Ausführungsform einer Biegeausgleichswalze,
- Figur 2: eine schematische, geschnittene Teildarstellung einer weiteren Ausführungsform der Biegeausgleichswalze mit einem in den radial an die Drossel angrenzenden Versorgungskanalabschnitt mündenden Querkanal,
- Figur 3: eine schematische, geschnittene Teildarstellung einer weiteren Ausführungsform der Biegeausgleichswalze mit einem in Form eines Gaspolsters vorgesehenen Druckpolster und
- Figur 4: eine schematische, geschnittene Teildarstellung einer weiteren Ausführungsform der Biegeausgleichswalze mit einem Druckspeicher, der mit volumenkompressiblem Material hinterfüllt ist.

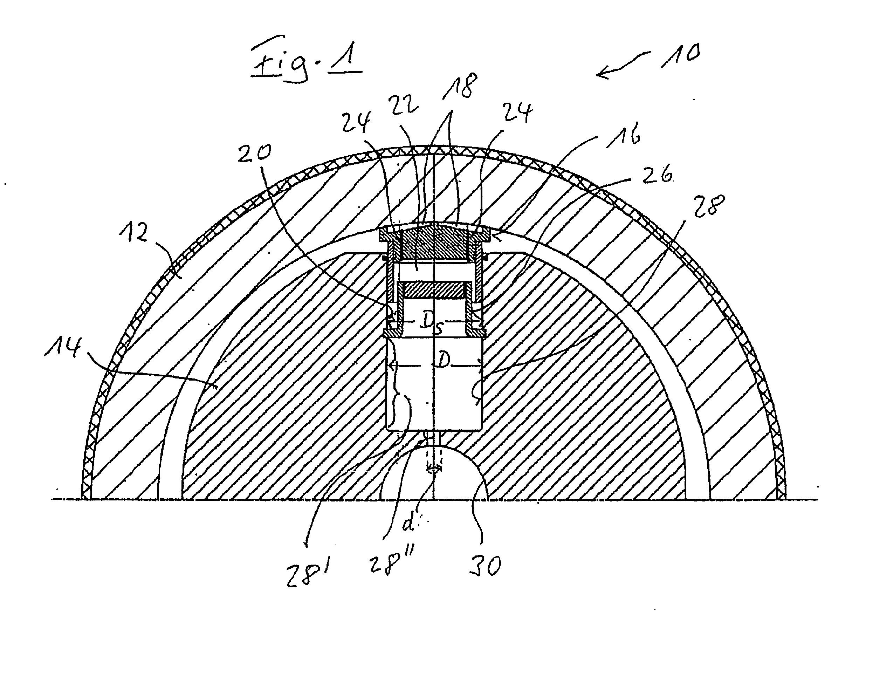

Figur 1 zeigt in schematischer, geschnittener Teildarstellung eine Biegeausgleichswalze 10, die einen umlaufenden Walzenmantel 12, ein den Walzenmantel 12 axial durchsetzendes drehfestes Joch 14 und wenigstens eine zwischen dem Joch 14 und dem Walzenmantel 12 angeordnete Stützquelle 16 umfasst.

Bei der Stützquelle 16 kann es sich beispielsweise um eine hydrostatisch oder hydrodynamisch betriebene Stützquelle handeln. Im vorliegenden Fall ist wenigstens eine mantelseitig mit einer oder mehreren Hydrostatiktaschen 18 versehene hydrostatische Stützquelle 16 vorgesehen.

Wie anhand der Figur 1 zu erkennen ist, ist die Stützquelle 16 in einer im Joch 14 vorgesehenen radialen Stützquellenbohrung 20 radial beweglich dichtend geführt. Der Druckraum 22 der Stützquelle 16 ist mit jeweils wenigstens eine Drosselbohrung 24 mit den Hydrostatiktaschen 18 verbunden.

Der Druckraum 22 der Stützquelle 16 ist zur Dämpfung der Biegeausgleichswalze 10 über eine Drossel 26 mit Druckfluid, d.h. insbesondere Öl, versorgt, das über einen im Joch 14 vorgesehenen, der betreffenden Stützquelle 16 zugeordneten radialen Versorgungskanal 28 zugeführt wird.

Wie anhand der Figur 1 zu erkennen ist, umfasst der Versorgungskanal 28 einen radial an die Dämpfungsdrossel 26 angrenzenden Abschnitt 28', dessen Durchmesser D größer oder gleich dem halben Durchmesser Ds/2 der Stützquellenbohrung 20 ist. Beim vorliegenden Ausführungsbeispiel ist dieser Durchmesser D des an die Drossel 26 angrenzenden Versorgungskanalabschnitts 28' im Wesentlichen gleich dem Durchmesser Ds der Stützquellenbohrung 20.

Der Versorgungskanal 28 erstreckt sich radial zwischen der Dämpfungsdrossel 26 der betreffenden Stützquelle 16 und einer mehreren Stützquellen 16 gemeinsamen axialen Versorgungsleitung 30. Wie anhand der Figur 1 zu erkennen ist, besitzt dabei ein an die axiale Versorgungsleitung 30 angrenzender Abschnitt 28" des Versorgungskanals 28 einen kleineren Durchmesser d als der an die Drossel 26 angrenzende Versorgungskanalabschnitt 28'. Wie der Figur 1 weiter entnommen werden kann, ist der an die axiale Versorgungsleitung 30 angrenzende Versorgungskanalabschnitt 28" kleineren Durchmessers d in Radialrichtung der Walze 10 betrachtet kürzer, vorzugsweise deutlich kürzer als der an die Dämpfungsdrossel 26 angrenzende Versorgungskanalabschnitt 28' größeren Durchmessers D. Beim vorliegenden Ausführungsbeispiel ist der Versorgungskanal 28 in Radialrichtung der Walze 10 betrachtet über nahezu seine gesamte Länge hinweg durch den Abschnitt 28' relativ größeren Durchmessers D gebildet. Grundsätzlich kann sich der Abschnitt 28' größeren Durchmessers auch bis zur axialen Versorgungsleitung 30 erstrecken, d.h. der Versorgungskanal 28 kann grundsätzlich auch durchgehend den größeren Durchmesser D besitzen.

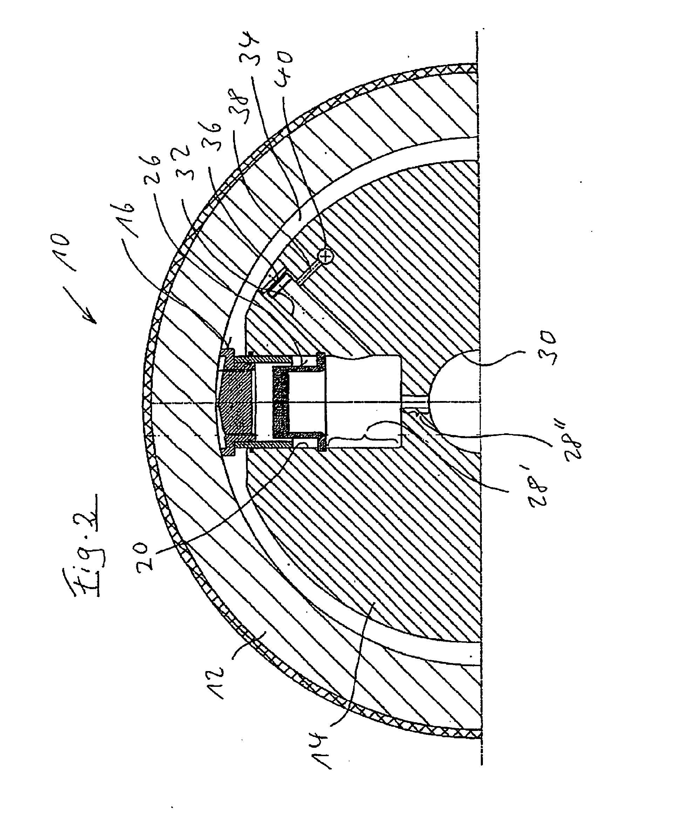

Die in der Figur 2 gezeigte Ausführungsform der Biegeausgleichswalze 10 unterscheidet sich von der der Figur 1 im Wesentlichen dadurch, dass in den radial an die Dämpfungsdrossel 26 angrenzenden Versorgungskanalabschnitt 28' ein im Joch 14 vorgesehener, sich allgemein in Querrichtung erstreckender Querkanal 32 mündet. Wie anhand der Figur 2 zu erkennen ist, erstreckt sich dieser Querkanal 32 im vorliegenden Fall in der dargestellten Querschnittsebene ausgehend vom Versorgungskanalabschnitt 28' schräg nach oben bis in den zwischen dem Joch 14 und dem Walzenmantel 12 angeordneten Ringraum 34, wobei er an seinem dem Ringraum 34 zugewandten Ende jedoch durch ein Verschlusselement 36 verschlossen ist.

Der Querkanal 32 ist mit kompressiblem Gas gefüllt, das über eine im Joch 14 vorgesehene Gaszuleitung 38 in den Querkanal 32 eingebracht wurde. Dabei kann die Gaszuleitung 38 mit einer den Querkanälen 32 mehrerer Stützquellen 16 zugeordneten gemeinsamen axialen Leitung 40 verbunden sein. Das Gas kann insbesondere unter hydraulischem Betriebsdruck der Walze 10 in den Querkanal 32 eingebracht werden.

Im Übrigen kann die vorliegende Ausführungsform wieder den gleichen Aufbau wie die der Figur 1 besitzen. Einander entsprechenden Teilen sind gleiche Bezugszeichen zugeordnet.

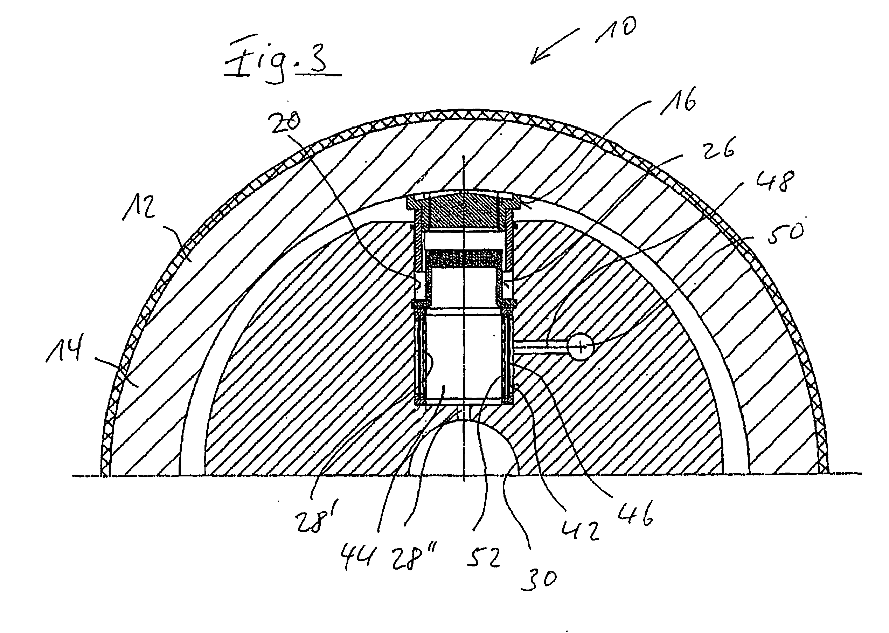

Die Ausführungsform gemäß Figur 3 unterscheidet sich von der der Figur 1 im Wesentlichen dadurch, dass an der Innenwand des radial an die Dämpfungsdrossel 26 angrenzenden Versorgungskanalabschnitts 28' ein Druckspeicher 42 vorgesehen ist, der nach innen zum Druckfluid 44 hin vorzugsweise durch eine Membran 46 begrenzt ist. Im vorliegenden Fall ist des Druckspeichers 42 in Form eines zur Innenwand des radial an die Dämpfungsdrossel 26 angrenzenden Versorgungskanalabschnitts 28' koaxialen Gaspolsters vorgesehen. Das Gas kann wieder über eine im Joch 14 vorgesehene Gaszuleitung 48 eingebracht werden. Dabei kann die einer jeweiligen Stützquelle 16 zugeordnete Gaszuleitung 48 wieder mit einer mehreren Stützquellen 16 zugeordneten gemeinsamen axialen Leitung 50 verbunden sein. Auch in diesem Fall wird das Gas zweckmäßigerweise wieder unter einem hydraulischen Betriebsdruck der Walze 10 eingebracht.

Bei im Wesentlichen konstantem Betriebsdruck der Walze 10 kann der Druckspeicher 42 insbesondere mit einem im Wesentlichen konstanten Gasdruck vorgespannt sein. Im hydraulisch drucklosen Betrieb der Walze 10 ist die Membran 46 des Druckspeichers zweckmäßigerweise durch ein Lochblech 52 stabilisiert.

Im Übrigen kann die vorliegende Ausführungsform zumindest im Wesentlichen wieder den gleichen Aufbau wie die der Figur 1 besitzen. Einander entsprechenden Teilen sind gleiche Bezugszeichen zugeordnet.

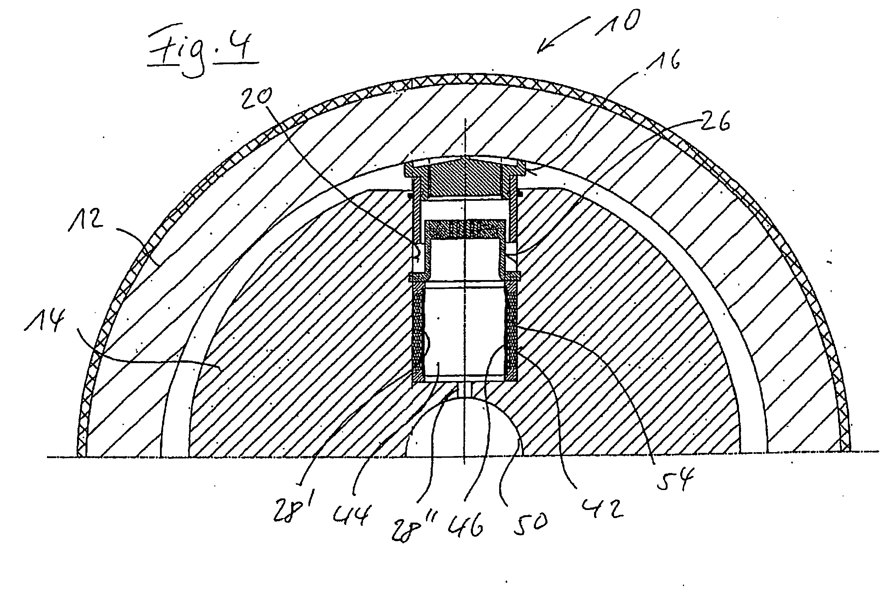

Die Ausführungsform gemäß Figur 4 unterscheidet sich von der der Figur 3 im Wesentlichen dadurch, dass anstelle eines Gaspolsters der Druckspeicher 42 mit volumenkompressiblem Material 54 hinterfüllt ist. Bei geringen Drücken ist zum Beispiel Polyurethanschaum (bis etwa 7 bar) oder Gummikork (bis etwa 30 bar) geeignet. Für höhere Drücke bis etwa 100 bar können insbesondere gepresste Zöpfe aus Drahtgestricken eingesetzt werden, wie sie in Schockabsorbern verwendet werden.

Im Übrigen kann die vorliegende Ausführungsform zumindest im Wesentlichen wieder den gleichen Aufbau wie die der Figur 3 besitzen. Einander entsprechenden Teilen sind gleiche Bezugszeichen zugeordnet.

### Bezugszeichenliste

- 10: Biegeausgleichswalze
- 12: Walzenmantel
- 14: Joch
- 16: Stützquelle
- 18: Hydrostatiktasche
- 20: Stützquellenbohrung
- 22: Druckraum
- 24: Drosselbohrung
- 26: Dämpfungsdrossel
- 28: Versorgungskanal
- 28': an die Dämpfungsdrossel angrenzender Versorgungskanalabschnitt
- 28": an die axiale Versorgungsleitung angrenzender Versorgungskanalabschnitt
- 32: Querkanal
- 34: Ringraum
- 36: Verschlusselement
- 38: Gaszuleitung
- 40: axiale Leitung
- 42: Druckspeicher
- 44: Druckfluid, Öl
- 46: Membran
- 48: Gaszuleitung
- 50: axiale Leitung
- 52: Lochbloch
- 54: volumenkompressibles Material

- D: Durchmesser
- D_{S}: Durchmesser
- d: Durchmesser

## Patentansprüche

1. Biegeausgleichswalze (10) mit einem umlaufenden Walzenmantel (12), einem den Walzenmantel (12) axial durchsetzenden drehfesten Joch (14) und wenigstens einer zwischen dem Joch (14) und dem Walzenmantel (12) angeordneten Stützquelle (16), die in einer im Joch (14) vorgesehenen radialen Stützquellenbohrung (20) radial beweglich dichtend geführt ist und deren Druckraum (22) über eine Drossel (26) mit Druckfluid versorgt wird, das über einen im Joch (14) vorgesehenen, der betreffenden Stützquelle (16) zugeordneten radialen Versorgungskanal (28) zugeführt wird, wobei
a) der Versorgungskanal (28) einen radial an die Drossel (26) angrenzenden Versorgungskanalabschnitt (28') umfasst, dessen Durchmesser (D) größer oder gleich dem halben Durchmesser Ds/2 der Stützquellenbohrung (20) ist,
b) sich der Versorgungskanal (28) radial zwischen der Drossel (26) der betreffenden Stützquelle (16) und einer mehreren Stützquellen (16) gemeinsamen axialen Versorgungsleitung (30) erstreck, **dadurch gekennzeichnet, dass** entweder
c1) ein an die axiale Versorgungsleitung (30) angrenzender Versorgungskanalabschnitt (28") des Versorgungskanals (28) einen kleineren Durchmesser (d) besitzt als der an die Drossel (26) angrenzende Versorgungskanalabschnitt (28'), wobei der an die axiale Versorgungsleitung (30) angrenzende Versorgungskanalabschnitt kleineren Durchmessers (d) in Radialrichtung der Walze (10) betrachtet kürzer ist als der an die Drossel (26) angrenzende Versorgungskanalabschnitt (28') größeren Durchmessers (D),
oder
c2) sich der an die Drossel (26) angrenzende Versorgungskanalabschnitt (28') größeren Durchmessers bis zur axialen Versorgungsleitung (30) erstreckt.

2. Biegeausgleichswalze nach Anspruch 1,
**dadurch gekennzeichnet,**
**dass** der Durchmesser (D) des an die Drossel (26) angrenzenden Versorgungskanalabschnitts (28') im Wesentlichen dem Durchmesser (Ds) der Stützquellenbohrung (20) entspricht.

3. Biegeausgleichswalze nach einem der vorhergehenden Ansprüche,
**dadurch gekennzeichnet,**
**dass** der Versorgungskanal (28) in Radialrichtung der Walze (10) betrachtet über nahezu seine gesamte Länge hinweg durch den Abschnitt (28') relativ größeren Durchmessers (D) gebildet ist.

4. Biegeausgleichswalze nach einem der vorhergehenden Ansprüche,
**dadurch gekennzeichnet,**
**dass** in den radial an die Drossel (26) angrenzenden Versorgungskanalabschnitt (28') ein im Joch (14) vorgesehener, sich allgemein in Querrichtung erstreckender Querkanal (32) mündet.

5. Biegeausgleichswalze nach Anspruch 4,
**dadurch gekennzeichnet,**
**dass** der Querkanal (32) an seinem anderen Ende verschlossen ist.

6. Biegeausgleichswalze nach Anspruch 4 oder 5,
**dadurch gekennzeichnet ,**
**dass** der Querkanal (32) mit kompressiblem Gas gefüllt ist.

7. Biegeausgleichswalze nach Anspruch 6,
**dadurch gekennzeichnet ,**
**dass** das Gas über eine im Joch (14) vorgesehene Gaszuleitung (38) in den Querkanal (32) einbringbar ist.

8. Biegeausgleichswalze nach Anspruch 7,
**dadurch gekennzeichnet,**
**dass** das Gas unter hydraulischem Betriebsdruck der Walze (10) in den Querkanal (32) einbringbar ist.

9. Biegeausgleichswalze nach einem der vorhergehenden Ansprüche,
**dadurch gekennzeichnet ,**
**dass** an der Innenwand des radial an die Drossel (26) angrenzenden Versorgungskanalabschnitts (28') ein Druckspeicher (42) vorgesehen ist, der nach innen zum Druckfluid (44) hin vorzugsweise durch eine Membran (46) begrenzt ist.

10. Biegeausgleichswalze nach Anspruch 9,
**dadurch gekennzeichnet ,**
**dass** der Druckspeicher (42) in Form eines zur Innenwand des radial an die Drossel (26) angrenzenden Versorgungskanalabschnitts (28') koaxialen Gaspolsters vorgesehen ist.

11. Biegeausgleichswalze nach Anspruch 10,
**dadurch gekennzeichnet ,**
**dass** das Gas über eine im Joch (14) vorgesehene Gaszuleitung (48) einbringbar ist.

12. Biegeausgleichswalze nach Anspruch 11,
**dadurch gekennzeichnet ,**
**dass** das Gas unter hydraulischem Betriebsdruck der Walze (10) einbringbar ist.

13. Biegeausgleichswalze nach Anspruch 12,
**dadurch gekennzeichnet ,**
**dass** der Druckspeicher (42) bei im Wesentlichen konstantem Betriebsdruck der Walze (10) mit einem im Wesentlichen konstanten Gasdruck vorgespannt ist.

14. Biegeausgleichswalze nach Anspruch 12,
**dadurch gekennzeichnet,**
**dass** im hydraulisch drucklosen Betrieb der Walze (10) die Membran (46) des Druckspeichers (42) durch ein Lochblech (52) stabilisiert ist.

15. Biegeausgleichswalze nach Anspruch 9 ,
**dadurch gekennzeichnet ,**
**dass** der Druckspeicher mit volumenkompressiblem Material (54) hinterfüllt ist.

16. Biegeausgleichswalze nach Anspruch 15,
**dadurch gekennzeichnet ,**
**dass** das volumenkompressible Material (54) Polyurethanschaum, Gummikork und/oder gepresste Zöpfe aus Drahtgestricken umfasst.

17. Biegeausgleichswalze nach einem der Ansprüche 1 bis 5 oder 9,
**dadurch gekennzeichnet ,**
**dass** als Druckfluid (44) Öl vorgesehen ist.

## Claims

1. Controlled deflection roll (10) having a circulating roll shell (12), a rotationally fixed yoke (14) which passes through the roll shell (12) axially, and at least one support source (16) which is arranged between the yoke (14) and the roll shell (12), is guided sealingly in a radially movable manner in a radial support-source hole (20) which is provided in the yoke (14), and the pressure chamber (22) of which is supplied via a restrictor (26) with pressure fluid which is supplied via a radial supply channel (28) which is provided in the yoke (14) and is assigned to the relevant support source (16),
a) the supply channel (28) comprising a supply-channel section (28') which adjoins the restrictor (26) radially and the diameter (D) of which is greater than or equal to half the diameter D_{S}/2 of the support-source hole (20),
b) the supply channel (28) extending radially between the restrictor (26) of the relevant support source (16) and an axial supply line (30) which is common to a plurality of support sources (16),
**characterized in that** either
c1) A supply-channel section (28'') of the supply channel (28) which adjoins the axial supply line (30) having a smaller diameter (d) than the supply-channel section (28') which adjoins the restrictor (26), the supply-channel section of smaller diameter (d) which adjoins the axial supply line (30) being shorter as viewed in the radial direction of the roll (10) than the supply-channel section (28') of greater diameter (D) which adjoins the restrictor (26),
or
c2) the supply-channel section (28') of greater diameter which adjoins the restrictor (26) extending as far as the axial supply line (30).

2. Controlled deflection roll according to Claim 1,
**characterized in that** the diameter (D) of the supply-channel section (28') which adjoins the restrictor (26) corresponds substantially to the diameter (D_{S}) of the support-source hole (20).

3. Controlled deflection roll according to one of the preceding claims, **characterized in that**, as viewed in the radial direction of the roll (10), the supply channel (28) is formed over virtually its entire length by the section (28') of relatively greater diameter (D).

4. Controlled deflection roll according to one of the preceding claims, **characterized in that** a transverse channel (32) which is provided in the yoke (14) and extends generally in the transverse direction opens into the supply-channel section (28') which adjoins the restrictor (26) radially.

5. Controlled deflection roll according to Claim 4,
**characterized in that** the transverse channel (32) is closed at its other end.

6. Controlled deflection roll according to Claim 4 or 5, **characterized in that** the transverse channel (32) is filled with compressible gas.

7. Controlled deflection roll according to Claim 6,
**characterized in that** the gas can be introduced into the transverse channel (32) via a gas inflow line (38) which is provided in the yoke (14).

8. Controlled deflection roll according to Claim 7,
**characterized in that** the gas can be introduced into the transverse channel (32) under hydraulic operating pressure of the roll (10).

9. Controlled deflection roll according to one of the preceding claims, **characterized in that** a pressure accumulator (42) which is preferably delimited inwards towards the pressure fluid (44) by a diaphragm (46) is provided on the inner wall of the supply-channel section (28') which adjoins the restrictor (26) radially.

10. Controlled deflection roll according to Claim 9,
**characterized in that** the pressure accumulator (42) is provided in the form of a gas cushion which is coaxial with respect to the inner wall of the supply-channel section (28') which adjoins the restrictor (26) radially.

11. Controlled deflection roll according to Claim 10,
**characterized in that** the gas can be introduced via a gas inflow line (48) which is provided in the yoke (14).

12. Controlled deflection roll according to Claim 11,
**characterized in that** the gas can be introduced under hydraulic operating pressure of the roll (10).

13. Controlled deflection roll according to Claim 12,
**characterized in that** the pressure accumulator (42) is prestressed with a substantially constant gas pressure in the case of a substantially constant operating pressure of the roll (10).

14. Controlled deflection roll according to Claim 12,
**characterized in that** the diaphragm (46) of the pressure accumulator (42) is stabilized by a perforated plate (52) during hydraulically pressureless operation of the roll (10).

15. Controlled deflection roll according to Claim 9,
**characterized in that** the pressure accumulator is backfilled with volume-compressible material (54).

16. Controlled deflection roll according to Claim 15,
**characterized in that** the volume-compressible material (54) comprises polyurethane foam, cork rubber and/or pressed braids of knitted wire fabrics.

17. Controlled deflection roll according to one of Claims 1 to 5 or 9, **characterized in that** oil is provided as pressure fluid (44).

## Revendications

1. Rouleau à compensation de flèche (10) avec une enveloppe de rouleau périphérique (12), une monture (14) calée en rotation traversant axialement l'enveloppe de rouleau (12) et au moins une source d'appui (16) disposée entre la monture (14) et l'enveloppe de rouleau (12), qui est guidée de manière étanche en mouvement radial dans un alésage radial (20) de source d'appui prévu dans la monture (14) et dont la chambre de pression (22) est alimentée avec un fluide sous pression au moyen d'un étranglement (26), fluide qui est amené au moyen d'un canal d'alimentation radial (28) associé à la source d'appui concernée (16) et prévu dans la monture (14), dans lequel
a) le canal d'alimentation (28) comprend un segment de canal d'alimentation (28') adjacent radialement à l'étranglement (26), dont le diamètre (D) est supérieur ou égal à la moitié du diamètre D_{S}/2 de l'alésage de source d'appui (20),
b) le canal d'alimentation (28) s'étend radialement entre l'étranglement (26) de la source d'appui concernée (16) et une conduite d'alimentation axiale (30) commune à plusieurs sources d'appui (16),
**caractérisé en ce que** soit
c1) un segment de canal d'alimentation (28") du canal d'alimentation (28) adjacent à la conduite d'alimentation axiale (30) présente un diamètre (d) inférieur à celui du segment de canal d'alimentation (28') adjacent à l'étranglement (26), le segment de canal d'alimentation de plus petit diamètre (d) adjacent à la conduite d'alimentation axiale (30), considéré dans la direction radiale du rouleau (10), étant plus court que le segment de canal d'alimentation (28') de plus grand diamètre (D) adjacent à l'étranglement (26), soit
c2) le segment de canal d'alimentation (28') de plus grand diamètre adjacent à l'étranglement (26) s'étend jusqu'à la conduite d'alimentation axiale (30).

2. Rouleau à compensation de flèche selon la revendication 1, **caractérisé en ce que** le diamètre (D) du segment de canal d'alimentation (28') adjacent à l'étranglement (26) correspond sensiblement au diamètre (D_{S}) de l'alésage de source d'appui (20).

3. Rouleau à compensation de flèche selon l'une quelconque des revendications précédentes, **caractérisé en ce que** le canal d'alimentation (28), considéré dans la direction radiale du rouleau (10), est formé sur pratiquement toute sa longueur par le segment (28') de diamètre relativement plus grand (D).

4. Rouleau à compensation de flèche selon l'une quelconque des revendications précédentes, **caractérisé en ce qu'**un canal transversal (32) s'étendant d'une manière générale en direction transversale, prévu dans la monture (14), débouche dans le segment de canal d'alimentation (28') radialement adjacent à l'étranglement (26).

5. Rouleau à compensation de flèche selon la revendication 4, **caractérisé en ce que** le canal transversal (32) est fermé à son autre extrémité.

6. Rouleau à compensation de flèche selon la revendication 4 ou 5, **caractérisé en ce que** le canal transversal (32) est rempli de gaz compressible.

7. Rouleau à compensation de flèche selon la revendication 6, **caractérisé en ce que** le gaz peut être introduit dans le canal transversal (32) au moyen d'une conduite d'arrivée de gaz (38) prévue dans la monture (14).

8. Rouleau à compensation de flèche selon la revendication 7, **caractérisé en ce que** le gaz peut être introduit dans le canal transversal (32) sous une pression de service hydraulique du rouleau (10).

9. Rouleau à compensation de flèche selon l'une quelconque des revendications précédentes, **caractérisé en ce qu'**il est prévu, sur la paroi intérieure du segment de canal d'alimentation (28') radialement adjacent à l'étranglement (26), un accumulateur de pression (42) qui est délimité vers l'intérieur par rapport au fluide sous pression (44) de préférence par une membrane (46).

10. Rouleau à compensation de flèche selon la revendication 9, **caractérisé en ce que** l'accumulateur de pression (42) est prévu sous la forme d'un coussin de gaz coaxial par rapport à la paroi intérieure du segment de canal d'alimentation (28') radialement adjacent à l'étranglement (26).

11. Rouleau à compensation de flèche selon la revendication 10, **caractérisé en ce que** le gaz peut être introduit au moyen d'une conduite d'arrivée de gaz (48) prévue dans la monture (14).

12. Rouleau à compensation de flèche selon la revendication 11, **caractérisé en ce que** le gaz peut être introduit sous une pression hydraulique du rouleau (10).

13. Rouleau à compensation de flèche selon la revendication 12, **caractérisé en ce que** l'accumulateur de pression (42) est précontraint avec une pression de gaz sensiblement constante pour une pression de service sensiblement constante du rouleau (10).

14. Rouleau à compensation de flèche selon la revendication 12, **caractérisé en ce que** la membrane (46) de l'accumulateur de pression (42) est stabilisée par une tôle perforée (52) pendant le fonctionnement sans pression hydraulique du rouleau (10).

15. Rouleau à compensation de flèche selon la revendication 9, **caractérisé en ce que** l'accumulateur de pression est rempli à l'arrière avec un matériau compressible en volume (54).

16. Rouleau à compensation de flèche selon la revendication 15, **caractérisé en ce que** le matériau compressible en volume (54) comprend la mousse de polyuréthane, le liège de caoutchouc et/ou des nattes pressées de tricots métalliques.

17. Rouleau à compensation de flèche selon l'une quelconque des revendications 1 à 5 ou 9, **caractérisé en ce qu'**il est prévu de l'huile comme fluide sous pression (44).
